# EUROPEAN PATENT APPLICATION

(11) **EP 2 708 868 A1**
(43) Date of publication of application: **19.03.2014**
(21) Application number: 12184476.5
(22) Date of filing: 14.09.2012
(51) Int. Cl.: G01N 1/08, B27G 15/00

(54) **Device, method and system for taking a wood sample from a load of wood logs while on a vehicle**

(71) Applicant: Metso Paper Inc., 00130 Helsinki (FI)
(72) Inventor: Cambra, Carlos, 50014 Zaragoza (ES); Dàvila, José Luis, 50002 Zaragoza (ES); Peinado, Luis, 50017 Zaragoza (ES)
(74) Representative: Helke, Kimmo Kalervo

(57) **Abstract**

The invention relates to a device for taking a wood sample from a load of wood logs while on a vehicle. The device (13) is a manipulator (14) equipped with a probe (15), and the probe (15) is arranged to reach to at least a half of the dimension of the load (12) in the direction of the sample-taking direction (16). The invention also relates to a method and system for taking a wood sample from a load of wood logs while on a vehicle.

## Description

The present invention relates to a device for taking a wood sample from a load of wood logs while on a vehicle. The present invention also relates to a method and a system for taking a wood sample from such a load of wood logs.

By its nature, wood is a material which always includes more or less water, but for the pulp mills and the paper mills it is the dry weight of wood which is a very important property of the wood. However, when wood is purchased, it is the volume or weight of logs that is measured and the price is then determined on the grounds of that volume or weight. But because the water content of the wooden material such as logs or trunks varies because of the type and size of wood, weather and season etc., the pulp mill may pay too much or too little for the wood. This kind of trade is too inaccurate and thus unfair for both the purchaser and the supplier.

It would be desirable if the basis for the pricing was not the volume but dry content of the wood. There are various methods available for determining the dry weight of the wood, the method most used being oven-drying in which the sample is weighed before and after the oven in a standard environment. Other methods are based on measuring water content of the wood using various techniques such as microwaves, IR, NMR, gamma or X-ray, neutron techniques etc. These methods are accurate, but some of them are slow in terms of getting result. Practically, most of them are applicable for laboratory tests only. For determining the dry weight by any of the known methods, a sample of wood must be taken to analyze its dry weight or dry content. Taking a sample manually is too slow in pulp industry where trucks or carriages transporting the cargos or loads of wood arrive at the factory even in every five minutes. Further, taking a sample from the cargo while the wood logs or trunks are still on the vehicle is very arduous and even dangerous for the personnel accomplishing it. While the loads of wood in the trucks or the like include varying size of wood loaded up in varying density, i.e. unhomogeneously so that gradients of either thick or thin logs occur and, thus, moisture gradients occur, the dry weight of the whole load is naturally not homogenous throughout the load but varies sample-wise depending on the site where the sample is taken. This makes it possible to manipulate the result in a desired direction by choosing the area of sample taking. It is also possible for the supplier or the truck driver to load up his cargo in such a way that the person taking the sample can reach only to areas comprising more massive logs having higher dry weight content. Again, this kind of trade is too inaccurate and thus unfair for both the supplier and the purchaser.

The invention is intended to create a new type of device for taking a wood sample from a load of wood logs by means of which the wood sample can be taken reliably, quickly and safely. The invention is also intended to create a new type of method for taking a wood sample from a load of wood logs by means of which method the risk of the human error is minimal in the sample taking. The invention is further intended to create a new type of system for taking a wood sample from a load of wood logs by means of which the system the wood sample is taken exactly in a fully randomized position and treated and when necessary, even analyzed. The characteristic features of this invention are stated in the accompanying Claims. According to the invention, the wood sample is taken by a specific device. The sampling is thus accurate and safe. The method makes it impossible to manipulate the sample and the sampling. And still, the system contains all necessary equipment to first take a reliable sample and then to treat and even analyze the sample.

In this context, the term "cargo of wood logs" or "wood cargo" or "log cargo" or "wood load" is used to mean wood material in the form of logs or trunks when in a road or rail vehicle (truck, railway carriage etc.) for transportation from the place of harvesting to pulp mill or paper mill or saw mill site. The term "dry weight" or "dry content" or "dry bone weight" or "dryness" of the wood is used to mean the oven-dry mass of the wood or the percentage excluding moisture content of the wood and it should be clear to any skilled person.

In the following, the invention is described in detail with reference to the accompanying drawings showing embodiments of the invention, in which
- Figure 1: shows a back view of the device according to the invention,
- Figure 2: shows the device according to the invention during the sampling,
- Figure 3: shows a schematic drawing of a top view of the system according to the invention,
- Figure 4a: show a partial enlargement of Figure 3,
- Figure 4b: shows a schematic drawing of the points potential for taking a wood sample,
- Figure 5a: shows a schematic drawing of a top view of the system according to the invention,
- Figure 5b: shows a schematic drawing of the device according to the invention together with its accessories,
- Figure 6: shows the working phases of the device according to the invention during the sampling,
- Figure 7: shows a modification of the system according to the invention.

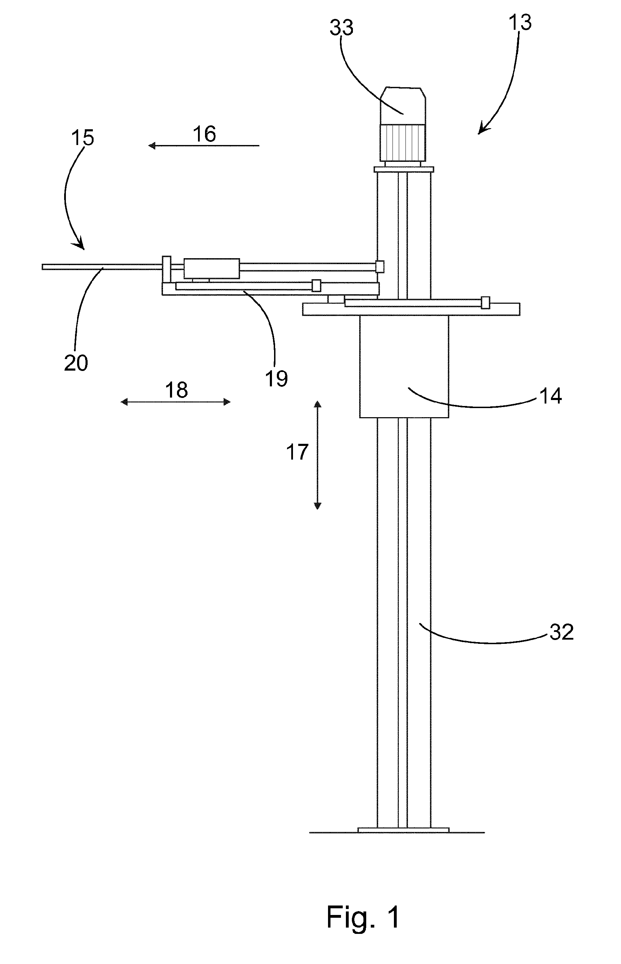

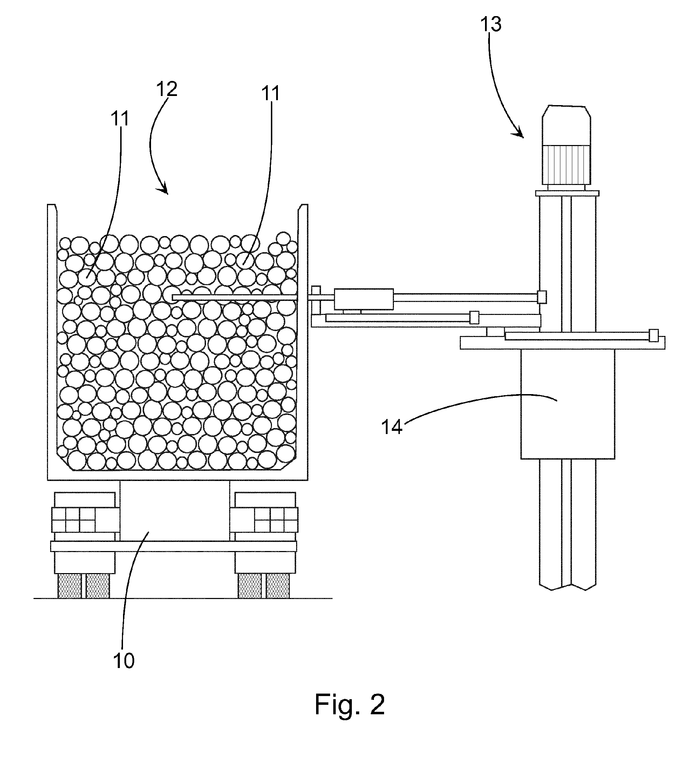

Figure 1 shows one device according to the invention alone. The device is for taking a wood sample from a load of wood. In Figure 2 the device is in action. Here a truck 10 is loaded with trunks of wood 11 forming a load 12. Usually, the wood is pulpwood or saw wood in various diameters and lengths. According to the invention, the device 13 is a manipulator 14 which is equipped with a probe 15. The probe 15 is arranged to reach at least a half of the dimension of the load 12 in the direction of the sample-taking direction 16. In this way, a comprehensive sample can be taken easily. As shown in Fig 2, the probe 15 penetrates through several trunks 11. In average, the probe penetrates through from three to seven trunks. Thus the sample represents the average content of the whole load with sufficient accuracy. With the manipulator, the sample taking can be automatized. This shortens the time of the sample taking and no man work is needed. Simultaneously, the probability of human error is minimized and the sample is accurate, which is fair for all parties.

In Figures 1 and 2, the probe 15 is in its farthermost position. According to the invention, the manipulator 14 has two trajectories 17 and 18 which are shown in Figure 1 with the double arrow lines. The first trajectory 17 is essentially vertical and the second trajectory 18 is essentially horizontal. In addition, one of the trajectories 17 and 18 is parallel with the sample-taking direction 16. In this way a minimum amount of trajectories is needed. Thus the manipulator has an advantageously simple structure. In practice, the truck is stopped next to the device and the probe is lifted vertically to a proper point of the load for taking a sample. Then the arm 19 supporting the probe 15 is moved horizontally towards the load. Finally, the probe is actuated and penetrated through the trunks. Then the probe is pulled out of the load and the sample is moved for further handling, as described later in more detail.

The structure of the probe can be varied. Here the probe 15 is a hollow drill 20. During the drilling, wood material forming the sample is accumulated inside the hollow drill. After sampling, the drill is emptied. Some other kind of milling tool can be used instead of the hollow drill. In the shown embodiment, the probe has a diameter of about 50 mm and it is like a thin-walled pipe with a toothed mouth. So the probe is rotated and simultaneously pushed against the load.

The invention relates also to a method for taking a wood sample from a load of wood. According to the method a manipulator 14 equipped with a probe 15 is used. In other words, a device described above is used. In the method the probe 15 is penetrated to at least a half of the dimension of the load 12 in the direction of the sample-taking direction 16. Thus, an accurate sample of standard volume is achieved quickly and easily.

The device can be controlled manually. However, according to a preferred embodiment of the invention the sample is taken from each load at a randomly chosen point of the load. The device has a programmable control system, which chooses randomly a point from the load where the sample is to be taken. In this way no human action can affect the sample taking. In other words, it is impossible to manipulate the system.

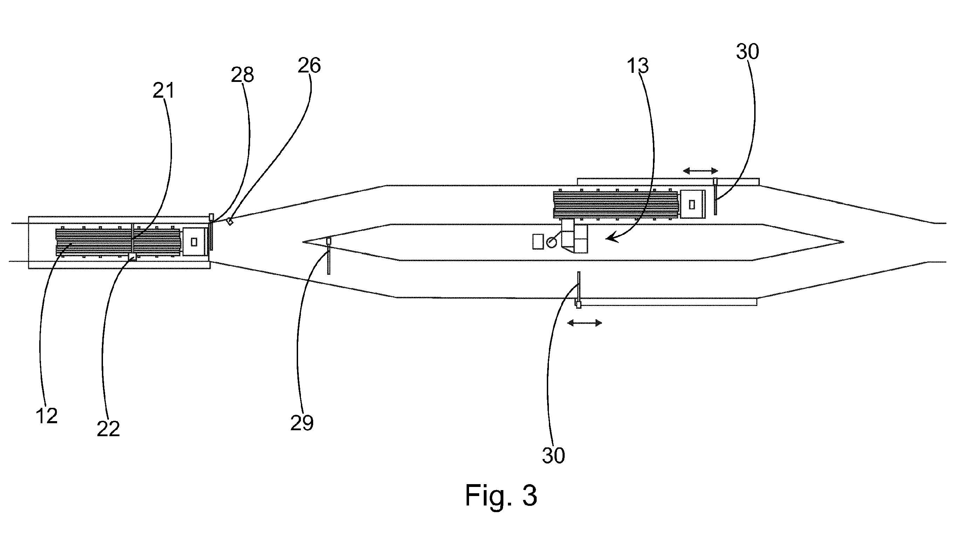

Figure 3 shows schematically one embodiment of the system according to the invention. The system is for taking a wood sample from a load of wood. As in the method, the system includes a manipulator 14 equipped with a probe 15. In the system, the probe is arranged to reach at least a half of the dimension of the load 12 in the direction of the sam-ple-taking direction 16. This gives an accurate sample easily and reliably.

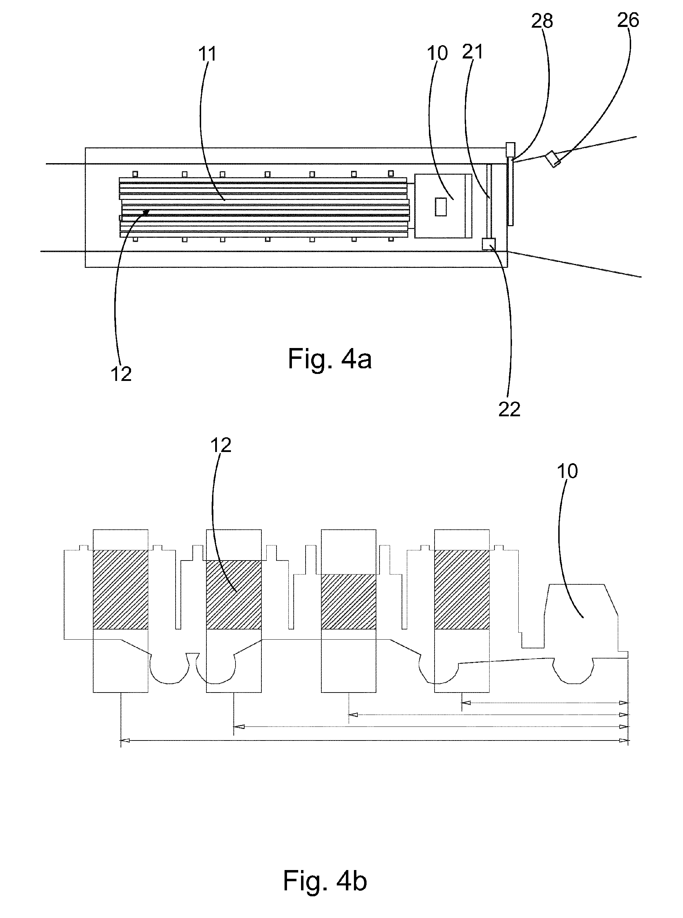

As mentioned earlier, the point for taking a sample is chosen randomly and advantageously automatically without any human intervention. For this purpose, the system further includes a scanning gantry 21, which is larger than the load 12 and equipped with a scanner 22 arranged to locate potential points for taking a wood sample from the load 12. The scanning gantry 21 is shown in a larger scale in Figure 4a. The scanning gantry 21 is bigger than the load because the whole load on the truck is scanned at a time. The scanning gantry 21 may extend to the whole lenght of the truck. Then the scanning gantry and the truck are immobile while the scanner 22 moves. If there are enough scanners, they can be fixed. Also a moving frame equipped with one or more scanners can be used. Then the truck is immobile and the frame moves or vice versa.

Figure 4b show a side view of the raw data from the scanner. The scanner detects or scanners detect the outline of the truck with a load. The system is so configured that it also detects, for example, the stakes of the truck and other non wood-containing zones of the vehicle and its cargo. This is to ensure that the probe can safely run through the trunks without hitting the stake or other improper areas for sampling. In Figure 4b, the potential sample taking areas or zones are shown in diagonal line hatch. Again, the system selects automatically one of the shown areas and takes a sample with the probe from the selected area.

In the shown system, the scanning gantry 21 is arranged before the manipulator 14 and there is a gap between the scanning gantry 21 and the manipulator 14 (Figure 3). In this way one truck may stop at the scanning gantry while another truck is already at the manipulator. In this arrangement the system can handle all incoming loads without any delays.

By using a hollow drill as the probe, a sample which includes round bars or pieces of wood of several trunks, is obtained. To be applicable in the known methods for determining the dry weight of the sample the wood material should be in the form of wood chips. Surprisingly, the system of the invention further includes a chipping machine 23 arranged to chop the sample. Preferably, the chipping machine 23 is arranged in close proximity to the manipulator 14, more preferably in connection with it so that the wood pieces from the probe are automatically put or dropped to the chipper 23. In this way the sample is immediately chopped into chips suitable for the dry weight analysis by some known method.

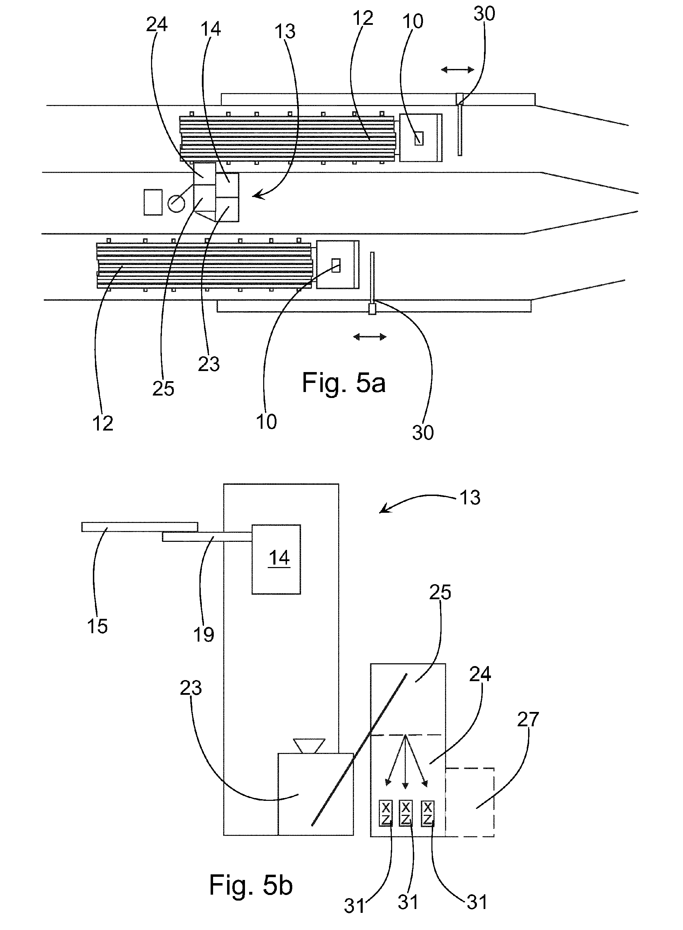

After the chipping machine, the chips are ready to be used for determining the dry weight of the wood sample. To make the system more efficient and accurate, the system further includes a packaging machine 24 arranged to pack the chips of the sample. The packaging machine 24 is also arranged in proximity to the chipping machine 23, preferably in connection with it so that the wood chips from the chipping machine are automatically led or led to the packaging machine. Thus, all steps - probing, chipping and packaging - are combined to be performed compactly in one place, which takes little space, saves time as well as efforts and is less prone to variations caused by external factors. In the method, the sample is chopped and then divided in three identical sub-samples for different parties and for a record. In other words, the packaging machine 24 includes a sorting device 25 arranged to dose the chips in several identical sub-sample 31 (Figure 5b). In this embodiment, there are three sub-samples, but there could be many more if needed. One sample for the supplier, one sample for the buyer to be measured and one sample for the record. In the pulp mill, one sample is analyzed and the dry weight of the whole load is calculated. According to this test, the value of the load is then determined. If need, also the supplier may test his sample. If there were any remarkable differences between the results, the record sample would then be analyzed to make the trade fair.

In the shown embodiment, the packed sub-samples are transferred to the laboratory for determining their dry content. Each sub-sample package also includes the identifications data of the load. The system may for example identify the truck's license plate with a camera 26 (Figure 4a). Or the truck may include some kind of readable tag or the like which is detected by the system. Or the driver could enter his ID in the system. At the packaging step the necessary information is provided with the package, for example printed on a label that is adhered to the package by the packaging machine 24. All the information is also stored in the system. Thus each package has its unique code and it is possible to retrieve the information about the sample from the database of the system at a later time.

The system may be modified further. In one embodiment, a water-content analyzer 27 is provided in proximity to the chipping machine or the packaging machine 24 (Figure 5b). In this embodiment, the sub-samples from the sorting device 25 are separated so that one sub-sample is led to water-content analyzer 27 while the other two sub-samples are led to the packaging machine and labeled and distributed in the manner described above. In this way, the dry weight of the load can be determined almost immediately. Naturally, it is to be understood that the device 27 must utilize some other technique than oven-drying or other time-demanding techniques. For example a moisture analyzer based on NMR (Nuclear Magnetic Resonance) technique could be well applicable in the method of the invention due to its accuracy and low measuring time.

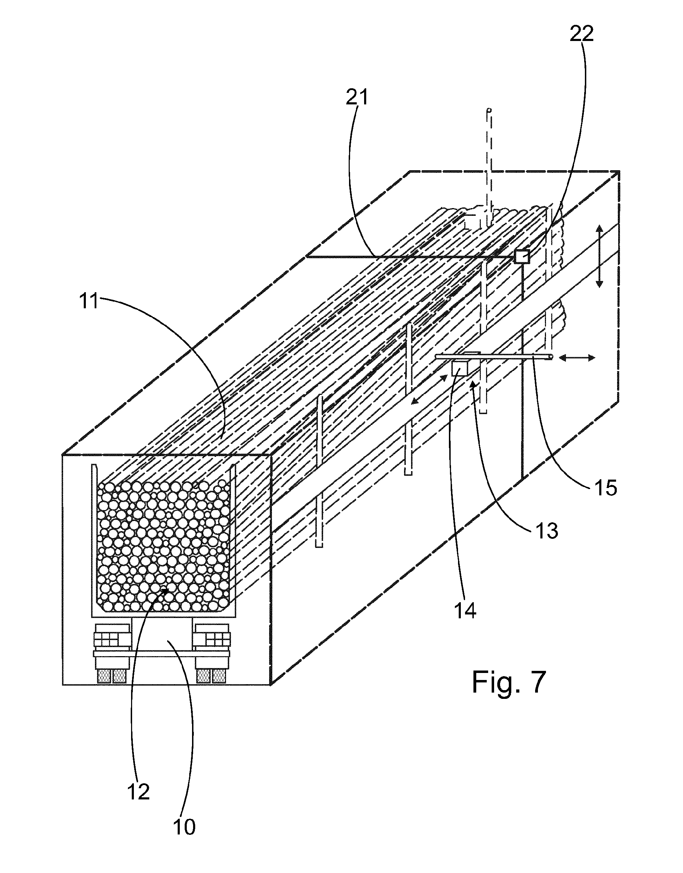

Figure 7 shows a modified embodiment of the system. Here the scanning station and manipulator station are combined to one station where the scanning and probing are both performed. The manipulator 14 is supported to the scanning gantry 21. After scanning, the manipulator moves to a proper, but randomly selected point of the load and takes the sample. In this embodiment, the manipulator can take the sample from both sides of the truck, and even from the top of the load. Simultaneously, the manipulator is more stable when it uses the scanning gantry as a supporting frame. In Figure 7, the chipping machine, packaging machine and/or moisture analyzer are not shown, but advantageously they are located in connection with the scanning gantry. Anyhow, the size of the system is remarkably compact with all the functions combined in one single unit.

Figures 4a and 5a show the general lay-out of the system. Figure 4a shows one truck at the scanner station. At the scanner gantry 21, there is a camera 26 for the vehicle's plate number or the like for identification of the load in question. The scanner gantry 21 is also equipped with an entrance barrier 28. The truck stops in front of the entrance barrier 28, below the scanner gantry 21. The scanner scans the truck and its load by a photocell beam or a vision camera combined with a laser. By the scanning, the system gets measured data of truck profile and dimensions, horizontal distance from the truck front as well as minimum and maximum heights for the sampler. On grounds of this information, the system finds valid zones for taking the sample (i.e. zones containing wood material) and calculates a proper point for a sample by utilizing randomizing routine known as such. The control system will thus randomly choose the horizontal zone, vertical zone and the side of the truck. The system will show the chosen zone to the truck driver on a screen, then entrance barrier 28 is lifted and the truck is instructed to drive further.

Before the sampling station, there is a second barrier 29, shown in Figure 3, for guiding the truck to the left or right side of the sampling station. The side is determined randomly by the system. The correct movement of the truck is confirmed and the sample taking may continue. With the two-line system of Figure 5a it is possible to one truck on one line to be sampled while another truck is arriving at its place on the other line. At both sides, there are sliding barriers 30 stopping the trucks at the place selected and directed by the system. The upper truck of Figure 5a is sampled at the fourth zone, while from the lower truck, the sample is taken at the second zone. The potential zone was chosen by the system and the sliding barriers were run accordingly. In this embodiment, one manipulator is provided to take a sample from both trucks alternately. There can also be two manipulators, one for each truck.

At the manipulator, the sliding barrier moves along a rail extending in the driving direction to the randomly selected horizontal zone according the instructions of the system. Forced by the sliding barrier, the truck stops close to the sliding barrier. A distance sensor together with light signals or the like guide the truck driver and also confirms that truck position is correct. Then the manipulator moves vertically to the randomly selected vertical zone and it is confirmed by a sensor that there are no metal elements ahead. If obstacles are found either the driver is instructed to move his vehicle or the manipulator makes a movement. When it is found that the point is suitable for sample taking, the probe penetrates in the trunks. Here, the sample is kept inside the hollow drill which is then ejected and the sample material isdropped into a small chipping machine.

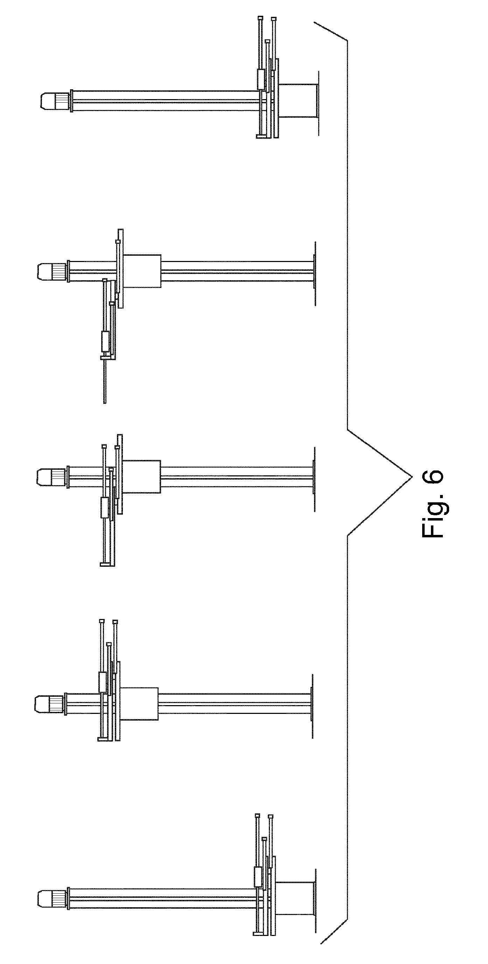

In Figure 6, the working phases of the device are shown. At first, the manipulator is in its standby position. In standbyposition the manipulator unit lies in the lowest position on the vertical guide 32 (Figure 1), the probe and its arm being pulled away from the driving line. When the truck guided by the sliding barrier stops, , on the driving line at the right place with respect to the manipulator, the manipulator driven by the motor 33 (Figure 1) at the upper end of the vertical guide 32 will elevate to a desired level up to maximum of four meters. Then the probe arm approaches the load horizontally from a distance of maximum one meter (third drawing) until it touches the load. Finally, the probe penetrates into the load to a depth of maximum 1.2 meter. After this, the probe moves backward and drops the sample into a chipping machine (fifth drawing).

In one embodiment, the sample diameter is about 50 mm. When the sampling length is 1200 mm, it is possible to get samples from the center of the load. For example, Eucalyptus has a density range about 750-850 kg/m³. Then the approximate dry bone weight of one sample is 50-70% corresponding 1.4 dm³ corresponding 1.13 kg.

Due to the long probe, the sample consists of bits of wood taken from several trunks. The sample is then chipped and forwarded to the packaging machine. The packaging machine will dose and pack the three sub samples in three bags which are thermally closed. The bags are also labelled. The bags then are carried to the laboratory to be measured and stored.

In the packing machine, the chips fall in the spout placed in the upper part of the packing machine. A desired quantity of chips are dosed in small sub-samples according to volume or weight. The bags are filled with the sub-samples and the bags are thermally closed. Simultaneously, the labels of the bags are printed and the bags are ejected out of the packing machine and carried to the laboratory.

By the system according to the invention, the sample is taken directly from the trucks. So, samples are taken on all of the trucks, before unloading the cargo, for example in the entrance area of trucks to the mill. The sampling is fully automatic and random in any suitable area of the truck. With a long probe, a very accurate measurement of the water content is achieved, which is valid for economical purposes. Also the time for sample taking is very short. Moreover, different type of probes can be used.

## Claims

1. Device for taking a wood sample from a load of wood logs while on a vehicle, **characterized in that** the device (13) is a manipulator (14) equipped with a probe (15), and the probe (15) is arranged to reach to at least a half of the dimension of the load (12) in the direction of the sample-taking direction (16).

2. Device according to Claim 1, **characterized in that** the probe (15) is a hollow drill (20).

3. Device according to Claim 1 or 2, **characterized in that** the manipulator (14) has two trajectories (17, 18), of which the first trajectory (17) is essentially vertical and the second trajectory (18) is essentially horizontal, and one of the trajectories (17, 18) is parallel with the sample-taking direction (16).

4. Method for taking a wood sample from a load of wood logs while on a vehicle, **characterized in that** in the method a manipulator (14) equipped with a probe (15) is used, and the probe (15) is penetrated to at least a half of the dimension of the load (12) in the direction of the sample-taking direction (16).

5. Method according to Claim 4, **characterized in that** the sample is taken from each load (12) at randomly chosen point of the load (12).

6. Method according to Claim 4 or 5, **characterized in that** the sample is chopped and then divided in three identical sub-samples for different parties and for a record.

7. Method according to any of Claims 4 - 6, **characterized in that** a device according to Claim 2 or 3 is used in the method.

8. System for taking a wood sample from a load of wood logs while on a vehicle, **characterized in that** the system includes a manipulator (14) equipped with a probe (15), which is arranged to reach at least a half of the dimension of the load (12) in the direction of the sample-taking direction (16).

9. System according to Claim 8, **characterized in that** the system further includes a chipping machine (23) arranged to chop the sample, and the chipping machine (23) is arranged in connection with the manipulator (14).

10. System according to Claim 9, **characterized in that** the system further includes a packaging machine (24) arranged to pack the chips of the sample, and packaging machine (24) is arranged in connection with the chipping machine (23).

11. System according to Claim 10, **characterized in that** the packaging machine (24) includes a sorting device (25) arranged to dose the chips in several identical sub-samples (31).

12. System according to any of Claim 8 - 11, **characterized in that** the system further includes a scanning gantry (21), which is larger than the load (12) and equipped with a scanner (22) arranged to locate potential points for taking a wood sample from the load (12).

13. System according to Claim 12, **characterized in that** the scanning gantry (21) is arranged before the manipulator (14) and there is a gap between the scanning gantry (21) and the manipulator (14).

14. System according to Claim 12, **characterized in that** the manipulator (14) is supported to the scanning gantry (21).

15. System according to any of Claim 9, **characterized in that** the packaging machine (24) includes a water-content analyzer (27).
